# EUROPEAN PATENT SPECIFICATION

(11) **EP 0 903 041 B1**
(45) Date of publication and mention of the grant of the patent: **14.02.2001**
(21) Application number: 97925140.2
(22) Date of filing: 02.06.1997
(51) Int. Cl.: H04N 7/26

(54) **IMPROVEMENTS IN OR RELATING TO CHANGING THE BIT RATE OF A SIGNAL**
VERBESSERUNGEN BEI BITRATENVERÄNDERUNG EINES SIGNALS
AMELIORATIONS DANS OU RELATIVES A UNE MODIFICATION DU DEBIT BINAIRE D'UN SIGNAL NUMERIQUE

(30) Priority: 03.06.1996 GB 9611511
(43) Date of publication of application: 24.03.1999
(73) Proprietor: Tandberg Television ASA, 1326 Lysaker (NO)
(72) Inventor: BOCK, Alois, Martin, Hampshire SO50 4PF (GB)
(74) Representative: Molyneaux, Martyn William
(86) International application number: GB9701486
(87) International publication number: WO9747128

(56) References cited:
- EP-A- 0 707 423
- EP-A- 0 711 077
- EP-A- 0 712 251
- WO-A-95/29546
- WO-A-95/29561
- WO-A-95/35628
- US-A- 5 339 315
- GUHA A ET AL: "MULTICHANNEL JOINT RATE CONTROL OF VBR MPEG ENCODED VIDEO FOR DBS APPLICATIONS" IEEE TRANSACTIONS ON CONSUMER ELECTRONICS, vol. 40, no. 3, 1 August 1994, pages 616-623, XP000471227

## Description

The present invention relates to a method and apparatus for changing the bit rate of a digital video signal.

Methods for changing the bit rate of a digital video signal are described in EP-A-0 712 251, EP-A-0 711 077, WO-A-9535628 or WO-A-9529561.

The digital signal may have been compressed using a compression algorithm employing quantisation method. If the digital signal is a digital video signal the quantisation may comprise quantisation of picture information and motion vectors relating to motion compensation between picture frames. For other types of signal the compression and quantisation techniques will be appropriate to the type of signal.

One method of changing the bit rate of a digitally compressed video signal, such as a video signal conforming to the well-known MPEG standards, would be to completely decode and re-code the signal using different parameters. The decoding step will recover the picture information and the re-coding step is applied using different quantisation parameters on the discrete cosine transform (DCT) coefficients.

It is however desirable to use a method of changing the bit rate of a digitally compressed video signal which avoids the necessity of subjecting the signal to complete decoding and re-coding. This is due to the fact that information may be lost if repetitive decoding and re-coding is carried out.

According to a first aspect of the present invention there is provided a method of changing the bit rate of a compressed input digital video signal which includes a first component which comprises quantised picture information and a second component which comprises mode decisions and motion vectors relating to motion compensation between picture frames, the method comprising the steps of; subjecting the input video signal to at least a partial decoding process including separating out the second component comprising the motion vectors; modifying the compression of the first component by modifying the quantisation of at least some of the quantised picture information; and reassembling the so modified picture information with the motion vectors to generate an output video signal including the modified picture information, the method being further characterised by implementing a predictive encoding loop including an inverse quantiser, a motion compensation block effecting motion compensation employing the motion vectors from the decoding process, and a mode block to control the encoding mode, the encoding loop being generated to follow the mode decisions and motion vectors dictated by the input video signal.

Further, according to the present invention there is provided apparatus for changing the bit rate of a compressed input digital video signal which includes a first component which comprises quantised picture information and a second component which comprises mode decisions and motion vectors relating to motion compensation between picture frames, the apparatus comprising; a decoder to subject the input video signal to at least a partial decoding process including separating out the component including the motion vectors; means to modify the compression of the first component by modifying the quantisation of at least some of the quantised picture information; an assembler to reassemble the so modified picture information with the motion vectors to generate an output video signal including the modified picture information, and a predictive encoding loop including an inverse quantiser, a motion compensation block effecting motion compensation employing the motion vectors from the decoder, and a mode block to control the encoding mode, the encoding loop following the mode decisions and motion vectors dictated by the input video signal.

The invention will now be described, by way of example, with reference to the accompanying drawings in which:
Figure 1 shows a block diagram of a system for modifying the bit rate of a video signal;
Figure 2 shows a first system, embodying the invention, for modifying the bit rate of a video signal; and
Figure 3 shows a second system, embodying the invention, for modifying the bit rate of a video signal.

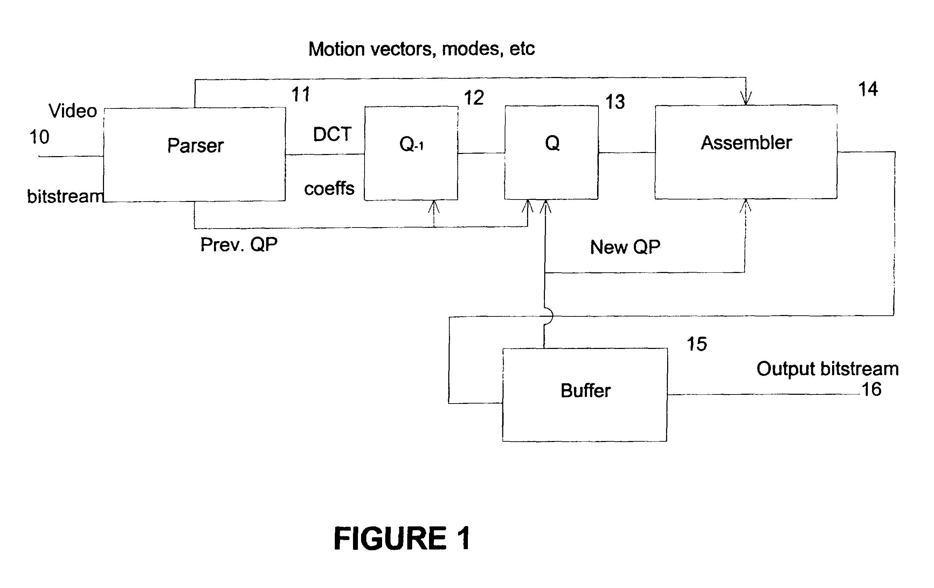

In Figure 1 an input terminal 10 receives an input digital video signal and supplies the input signal to a parser 11. The incoming video signal is compressed using a standard MPEG compressed algorithm and includes a continuous series of coded frames including intra-coded (I) frames, forward prediction (P) frames and bi-directional prediction (B) frames. The video signal also includes motion vectors which relate to motion compensation between picture frames and mode information as is well known in the art. The compression algorithm is based on discrete cosine transformation (DCT) to convert the parser values in the data blocks from the time domain to the frequency domain together with quantisation of each frequency component by a quantisation parameter (QP).

In the parser 11, the incoming video signal is partially decoded to separate out the DCT coefficients which are inverse quantised in the block 12 using the transmitted previous quantisation parameter QP. The re-quantised output from the block 13 is passed to an assembler 14 and thence through a buffer 15 to an output terminal 16 from which the output bit stream is supplied by the apparatus of Figure 1.

The re-quantisation of the I and P frames in the block 13 is effected using the previous quantisation parameter as supplied by the parser 11. Consequently there is no change in bit rate for these frames.

The re-quantisation of the B frames is effected using a new quantisation parameter supplied to the block 13 and to the assembler 14 under the control of the buffer 15. The new quantisation parameter is used to effect a quantisation which is higher than the previous quantisation and is thereby effective to reduce the bit rate of the B frames and hence of the video signal.
The parser 11 separates out the motion vectors and mode information from the DCT coefficients and supplies them to the assembler 14 where they are assembled with the re-quantised DCT coefficients to produce the bit stream to be supplied to the buffer 15.

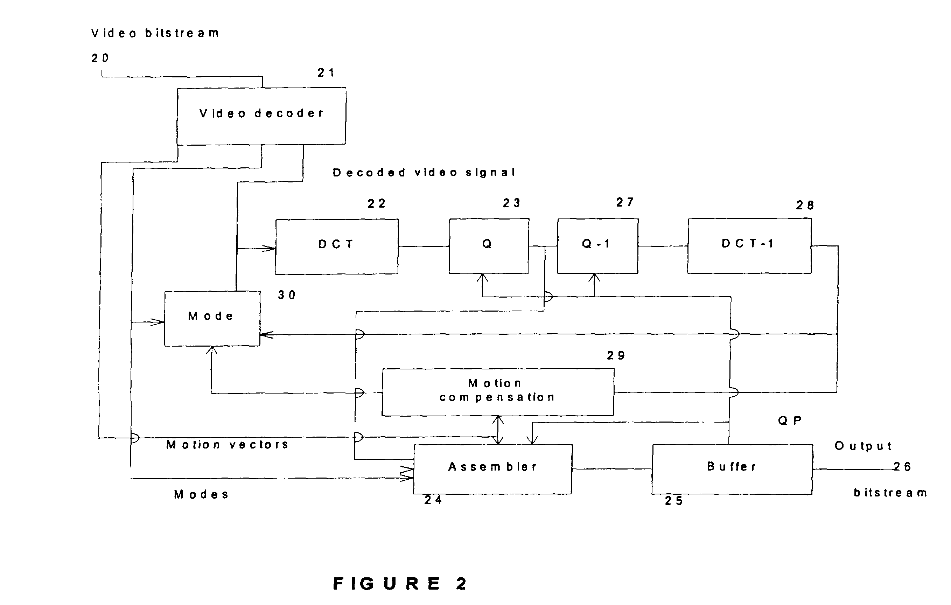

Referring now to Figure 2, an input video bit stream is applied to an input terminal 20. The input video bit stream is of the same form as the bit stream applied to the input terminal 10 of Figure 1. A video decoder 21 receives and decodes the bit stream from the input terminal 20 and supplies the decoded signal to a block 22 which subjects the decoded signal to discrete cosine transformation. The output from the block 22 is applied to a block 23 where the DCT coefficients are subject to quantisation before supply to an assembler 24 where the coefficients are assembled with the motion vectors and mode information supplied by the decoder 21.

The assembled video signal is supplied through a buffer 25 to an output terminal 26. The quantisation effected by the block 23 is applied to all the DCT coefficients supplied by the block 22 so that a new quantisation parameter and therefore new bit rate is applied to all the picture frames.

An inverse quantisation block 27 and inverse DCT transformation block 28 supply picture information to a motion compensation block 29 which effects motion compensation employing the motion vectors from the video decoder 21. A mode block 30 controls the encoding mode as a result of inputs from the decoder 21, the motion compensation block 29 and the block 28. The encoding loop acts as a slave encoder in so far as it follows all mode decisions and motion vectors as dictated by the incoming video bit stream. Extracting motion information, in particular, is important in order to avoid the need for a costly motion estimator in the encoding loop.

The essential difference between the system of Figure 2 and the system of Figure 1 is that in the system of Figure 2, all the DCT coefficients are re-quantised, not just those for the B frames. This increases the scope for changing the data rate substantially but is achieved at the expense of using a complete predictive encoding loop.

It will be appreciated that the above method and apparatus could equally be used on signals other than digital video signals. The invention could apply to any digital signal which includes two or more different types of information which each have different coding requirements. By re-coding only those parts of the signal which can be easily decoded and re-coded processing power is not wasted when steps are being taken to modify the bit rate of a signal.

This invention will be a useful addition to so-called statistical multiplexing systems such as those described in our co-pending applications GB9517130.2 and GB9607162.6.

The benefit of statistical multiplexing has been demonstrated even for a relatively small number of multiplexed video bit streams. In a near video on demand (NVOD) service the same file of recorded compressed video information is played out many times in parallel with time-shifted versions of itself to provide multiplexed video bit streams. The combined bit rate of the time shifted video bit streams may overload the output multiplexer used to multiplex the bit streams, i.e. a given combined bit rate would be exceeded. By transcoding only those parts of the bit stream which lead to potential overload, the invention provides a way of generating a new bit stream which has a bit rate changed so that the total allocated bit rate is not exceeded and the available bandwidth is therefore used more efficiently.

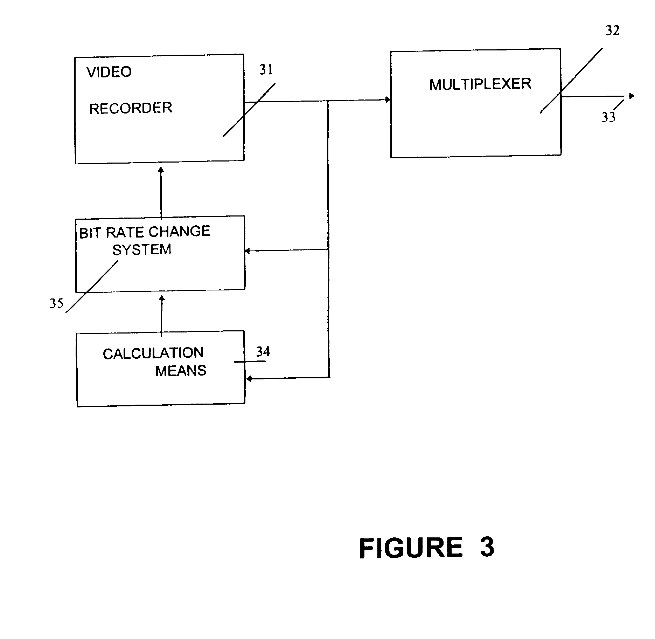

Referring now to Figure 3, a recorder 31 is employed to record the video bit stream for a NVOD service with a variable bit rate and a quantisation parameter of 9. The recorded bit stream is available to a multiplexer 32 from which the multiplexed NVOD bit stream is supplied to an output terminal 33. A bit rate profile of the recorded bit stream is derived by calculation in the calculating means 34. The time periods where the combined bit rate will exceed the total bit rate capacity of the multiplexer 32 are identified by the calculating means 34. The video bit stream is supplied to the system 35 which modifies the bit rate of the video bit stream under the control of the calculating means 34 and the modified bit stream is returned to be re-recorded in the recorder 31.

The system 35 to modify the bit rate of the bit stream is as shown in Figure 1 with a modification to derive the new quantisation parameter from the calculating means 34 instead of the buffer 15. The new quantisation parameter, which may for example be 11, is applied to re-code the B frames of the bit stream in the time periods identified by the calculating means so that the required quantisation parameter for the combined bit rate is obtained. While the effect of increasing the quantisation of the B frames from 9 to 11 is quite small in relation to one bit stream, the overall effect is sufficient to limit the combined bit rate to meet the capacity of the multiplexer 32 if the number of streams is large enough.

## Claims

1. A method of changing the bit rate of a compressed input digital video signal which includes a first component which comprises quantised picture information and a second component which comprises mode decisions and motion vectors relating to motion compensation between picture frames, the method comprising the steps of; subjecting the input video signal to at least a partial decoding process including separating out the second component comprising the motion vectors; modifying the compression of the first component by modifying the quantisation of at least some of the quantised picture information; and reassembling the so modified picture information with the motion vectors to generate an output video signal including the modified picture information, the method being further characterised by implementing a predictive encoding loop including an inverse quantiser, a motion compensation block effecting motion compensation employing the motion vectors from the decoding process, and a mode block to control the encoding mode, the encoding loop being generated to follow the mode decisions and motion vectors dictated by the input video signal.

2. A method according to claim 1, including a further step of recording the output digital signal.

3. A method as claimed in claim 2, comprising the further steps of reproducing the recorded output digital signal with time-shifted versions of itself and multiplexing the time-shifted versions of the output digital signal.

4. A method as claimed in claim 3, comprising the further steps of calculating the combined bit rate of the multiplexed versions of the output digital signal and indicating when the said combined bit rate exceeds a predetermined limit.

5. A method as claimed in claim 4, wherein the step of modifying the compression of the said first component of the input digital signal limits the said combined bit rate to the said predetermined limit.

6. A method as claimed in any one of the preceding claims wherein the first component of the input digital signal comprises a continuous series of coded picture frames and the second component of the input digital signal comprises motion vectors which relate to motion compensation between the picture frames.

7. A method as claimed in claim 6, wherein the input digital signal includes intra-coded (I) picture frames, forward prediction (P) picture frames, bi-directional (B) picture frames and a transmitted quantisation parameter, the method including the steps of inverse quantising the I, P and B frames, re-quantising the I and P frames with the transmitted quantisation parameter and re-quantising the B frames with a different quantisation parameter.

8. A method as claimed in claim 6, wherein the input digital signal includes intra-coded (I) picture frames, forward prediction (P) picture frames, bi-directional (B) picture frames and a transmitted quantisation parameter, the method including the steps of inverse quantising the I, P and B frames, and re-quantising the I, P and B frames with a quantisation parameter which is different from the transmitted quantisation parameter.

9. Apparatus for changing the bit rate of a compressed input digital video signal which includes a first component which comprises quantised picture information and a second component which comprises mode decisions and motion vectors relating to motion compensation between picture frames, the apparatus comprising; a decoder to subject the input video signal to at least a partial decoding process including separating out the component including the motion vectors; means to modify the compression of the first component by modifying the quantisation of at least some of the quantised picture information; an assembler to reassemble the so modified picture information with the motion vectors to generate an output video signal including the modified picture information, and a predictive encoding loop including an inverse quantiser, a motion compensation block effecting motion compensation employing the motion vectors from the decoder, and a mode block to control the encoding mode, the encoding loop following the mode decisions and motion vectors dictated by the input video signal.

10. Apparatus as claimed in claim 9, further comprising means to record the output digital signal.

11. Apparatus as claimed in claim 10, further comprising means to reproduce the output digital signal with time-shifted versions of itself and a multiplexer to multiplex the time-shifted versions of the output digital signal.

12. Apparatus as claimed in claim 11, further comprising calculation means to calculate the combined bit rate of the multiplexed versions of the output digital signal and to indicate when the said combined bit rate exceeds a predetermined limit.

13. Apparatus as claimed in claim 12, wherein the means to modify the compression of the said first component of the input digital signal is operable to limit the said combined bit rate to the said predetermined limit.

14. Apparatus as claimed in any one of claims 9 to 13, which is adapted to change the bit rate of a compressed input digital signal in which the first component of the input digital signal comprises a continuous series of coded picture frames and the second component of the input digital signal comprises motion vectors which relate to motion compensation between the picture frames.

15. Apparatus as claimed in claim 14, which is adapted to change the bit rate of a compressed input digital signal which includes intra-coded (I) picture frames, forward prediction (P) picture frames, bi-directional (B) picture frames and a transmitted quantisation parameter, the apparatus including means for inverse quantising the I, P and B frames, for re-quantising the I and P frames with the transmitted quantisation parameter and for re-quantising the B frames with a different quantisation parameter.

16. Apparatus as claimed in claim 14, which is adapted to change the bit rate of a compressed input digital signal which includes intra-coded (I) picture frames, forward prediction (P) picture frames, bi-directional (B) picture frames and a transmitted quantisation parameter, the apparatus including means for inverse quantising the I, P and B frames and for re-quantising the I, P and B frames with a quantisation parameter which is different from the transmitted quantisation parameter.

## Patentansprüche

1. Eine Methode, um die Bit-Rate eines komprimierten, digitalen Videoeingangssignals zu ändern; diese enthält eine erste Komponente, die aus quantifizierten Bildinformationen besteht, und eine zweite Komponente, die aus Modusentscheidungen und Bewegungsvektoren besteht, die sich auf die Bewegungskompensation zwischen den Einzelbildern beziehen; die Methode besteht aus den folgenden Schritten; das Videoeingangssignal wird zumindest einer teilweisen Dekodierung unterzogen, einschliesslich eine Abtrennung der zweiten Komponente, die aus den Bewegungsvektoren besteht; Modifikation der Kompression der ersten Komponente durch Modifikation der Quantifizierung von zumindest einem Teil der quantifizierten Bildinformation; und Zusammensetzen der so modifizierten Bildinformation mit den Bewegungsvektoren, um ein Videoausgangssignal zu erzeugen, einschliesslich der modifizierten Bildinformation; die Methode zeichnet sich des weiteren durch die Implementation einer vorausschauenden Kodierschleife aus, einschliesslich einem inversen Quantifizierer, einem Block für die Bewegungskompensation, der sich auf die Bewegungskompensation auswirkt und die Bewegungsvektoren aus dem Dekodierprozess benützt, und einem Modusblock, um den Kodiermodus zu steuern; die dabei erstellte Kodierschleife folgt den Modusentscheidungen und den Bewegungsvektoren, die durch das Videoeingangssignal vorgegeben werden.

2. Eine Methode laut Anspruch 1, einschliesslich einem weiteren Schritt, um das digitale Ausgangssignal aufzuzeichnen.

3. Eine Methode laut Anspruch 2, bestehend aus dem weiteren Schritt, das digitale Ausgangssignal in einer zum ursprünglichen Signal zeitverzögerten Version wiederzugeben, wobei die zeitverzögerten Versionen des digitalen Ausgangssignals im Multiplexverfahren wiedergegeben werden.

4. Eine Methode gemäss der Ansprüche 3, die die weiteren Schritte enthält, die kombinierte Bitrate des digitalen Ausgangssignals der im Multiplexer-Betrieb erstellten Versionen zu berechnen und anzugeben, wenn die so berechnete Bitrate einen vorgegebenen Grenzwert überschreitet.

5. Eine Methode gemäss der Ansprüche 4, wobei der Schritt zur Modifikation der Kompression für die erste Komponente des digitalen Eingangssignals die kombinierte Bitrate auf den erwähnten, vorbestimmten Wert beschränkt.

6. Eine Methode gemäss der vorangegangenen Ansprüche, wobei die erste Komponente des digitalen Eingangssignales aus einer Serie von kodierten Einzelbildern besteht und die zweite Komponente des digitalen Eingangssignals aus Bewegungsvektoren besteht, die sich auf die Bewegungskompensation zwischen den Einzelbildern bezieht.

7. Eine Methode gemäss der Ansprüche 6, wobei das digitale Eingangssignal intra-kodierte (I) Einzelbilder, vorausschauende, vorhersagende (P) Einzelbilder, bidirektionale (B) Einzelbilder und einen übertragenen Quantifizierungsparameter enthält; die Methode umfasst die Schritte zur inversen Quantifizierung der 1-, P- und B-Einzelbilder, wobei die 1- und P-Einzelbilder neu quantifiziert werden, und zwar mit dem übertragenen Quantifizierungsparameter, und die B-Einzelbilder neu quantifiziert werden, und zwar mit einem anderen Quantifizierungsparameter.

8. Eine Methode gemäss der Ansprüche 6, wobei das digitale Eingangssignal intra-kodierte (I) Einzelbilder, vorausschauende, vorhersagende (P) Einzelbilder, bidirektionale (B) Einzelbilder und einen übertragenen Quantifizierungsparameter enthält; die Methode umfasst die Schritte zur inversen Quantifizierung der 1-, P- und B-Einzelbilder, wobei die 1-, P- und B-Einzelbilder neu quantifiziert werden, und zwar mit einem Quantifizierungsparameter, der sich von dem übertragenen Quantifizierungsparameter unterscheidet.

9. Eine Vorrichtung, um die Bitrate eines komprimierten, digitalen Videoeingangssignals zu verändern, das eine erste Komponente enthält, die aus quantifizierten Bildinformationen besteht, und eine zweite Komponente, die aus Modusentscheidungen und Bewegungsvektoren besteht, die sich auf die Bewegungskompensation zwischen den Einzelbildern beziehen; die Vorrichtung besteht aus; einem Dekoder, um das Videoeingangssignal wenigstens teilweise zu dekodieren, einschliesslich der Abtrennung der Komponente, einschliesslich des Bewegungsvektors; eine Einrichtung, um die Kompression der ersten Komponente zu ändern, indem die Quantifizierung von zumindest einem Teil der quantifizierten Bildinformation modifiziert wird; einem Assembler, um die so modifizierte Bildinformation mit den Bildvektoren zu vereinen, damit ein Videoausgangssignal entsteht, einschliesslich der modifizierten Bildinformation, und vorausschauenden Kodierschleife aus, einschliesslich einem inversen Quantifizierer, einem Block für die Bewegungskompensation, der sich auf die Bewegungskompensation auswirkt und die Bewegungsvektoren aus dem Dekodierprozess benützt, und einem Modusblock, um den Kodiermodus zu steuern; die dabei erstellte Kodierschleife folgt den Modusentscheidungen und den Bewegungsvektoren, die durch das Videoeingangssignal vorgegeben werden.

10. Eine Vorrichtung gemäss der Ansprüche 9, die ausserdem aus einer Einrichtung zum Aufzeichnen des digitalen Videosignals besteht.

11. Eine Vorrichtung laut Anspruch 10, bestehend aus dem weiteren Schritt, das digitale Ausgangssignal in einer zum ursprünglichen Signal zeitverzögerten Version wiederzugeben, wobei die zeitverzögerten Versionen des digitalen Ausgangssignals im Multiplexverfahren wiedergegeben werden.

12. Eine Vorrichtung gemäss der Ansprüche 11, die die weiteren Schritte enthält, die kombinierte Bitrate des digitalen Ausgangssignals der im Multiplexer-Betrieb erstellten Versionen zu berechnen und anzugeben, wenn die so berechnete Bitrate einen vorgegebenen Grenzwert überschreitet.

13. Eine Vorrichtung gemäss der Ansprüche 12, wobei der Schritt zur Modifikation der Kompression für die erste Komponente des digitalen Eingangssignals die kombinierte Bitrate auf den erwähnten, vorbestimmten Wert beschränkt.

14. Eine Vorrichtung gemäss der Ansprüche 9 bis 13, die dazu adaptiert ist, die Bitrate des komprimierten, digitalen Videoeingangssignals zu verändern, wobei die erste Komponente des digitalen Eingangssignales aus einer Serie von kodierten Einzelbildern besteht und die zweite Komponente des digitalen Eingangssignals aus Bewegungsvektoren besteht, die sich auf die Bewegungskompensation zwischen den Einzelbildern bezieht.

15. Eine Vorrichtung gemäss der Ansprüche 14, die dazu adaptiert ist, die Bitrate des komprimierten, digitalen Videoeingangssignals zu verändern, wobei das digitale Eingangssignal intra-kodierte (I) Einzelbilder, vorausschauende, vorhersagende (P) Einzelbilder, bidirektionale (B) Einzelbilder und einen übertragenen Quantifizierungsparameter enthält; die Vorrichtung umfasst die Schritte zur inversen Quantifizierung der 1-, P- und B-Einzelbilder, wobei die I- und P-Einzelbilder neu quantifiziert werden, und zwar mit dem übertragenen Quantifizierungsparameter, und die B-Einzelbilder neu quantifiziert werden, und zwar mit einem anderen Quantifizierungsparameter.

16. Eine Vorrichtung gemäss der Ansprüche 14, die dazu adaptien ist, die Bitrate des komprimierten, digitalen Videoeingangssignals zu verändern, wobei das digitale Eingangssignal intra-kodierte (I) Einzelbilder, vorausschauende, vorhersagende (P) Einzelbilder, bidirektionale (B) Einzelbilder und einen übertragenen Quantifizierungsparameter enthält; die Vorrichtung umfasst die Schritte zur inversen Quantifizierung der 1-, P- und B-Einzelbilder, wobei die 1-, P- und B-Einzelbilder neu quantifiziert werden, und zwar mit einem Quantifizierungsparameter, der sich von dem übertragenen Quantifizierungsparameter unterscheidet.

## Revendications

1. Une méthode permettant de modifier le débit binaire d'un signal vidéo numérique d'entrée comprimé à deux composantes, la première composante comprenant des informations d'images quantifiées et la deuxième composante comprenant des décisions de mode et des vecteurs de mouvements relatifs à la compensation de mouvements entre les images, ladite méthode regroupant les étapes de : soumission du signal vidéo d'entrée à au moins un processus de décodage partiel mettant en jeu l'isolation de la deuxième composante constituée des vecteurs de mouvements ; modification de la compression de la première composante en changeant la quantification d'au moins une partie des informations d'images quantifiées ; et réassemblage des informations d'images ainsi modifiées avec les vecteurs de mouvements pour produire un signal vidéo de sortie intégrant les informations d'images modifiées, ladite méthode se caractérisant en outre par la mise en oeuvre d'une boucle de codage prédictif mettant en jeu un quantificateur inverse, un bloc compensation des mouvements effectuant une compensation des mouvements au moyen des vecteurs de mouvements issus du processus de décodage et un bloc mode gérant le mode d'encodage, la boucle de codage étant générée pour suivre les décisions de mode et les vecteurs de mouvements dictés par le signal vidéo d'entrée.

2. Une méthode conforme à la revendication 1, comportant une étape supplémentaire d'enregistrement du signal numérique de sortie.

3. Une méthode telle que revendiquée à la revendication 2, comportant les étapes supplémentaires de reproduction du signal numérique de sortie enregistré avec des versions décalées dans le temps de lui-même et de multiplexage des versions décalées dans le temps du signal numérique de sortie.

4. Une méthode telle que revendiquée à la revendication 3 comportant les étapes supplémentaires de calcul du débit binaire combiné des versions multiplexées du signal numérique de sortie et indiquant quand ledit débit binaire dépasse une limite prédéterminée.

5. Une méthode telle que revendiquée à la revendication 4 dans le cadre de laquelle l'étape de modification de la compression de ladite première composante du signal numérique d'entrée limite ledit débit binaire à ladite limite prédéterminée.

6. Une méthode, telle qu'éventuellement revendiquée dans toutes les revendications précédentes, dans le cadre de laquelle la première composante du signal numérique d'entrée est constituée d'une série continue d'images codées, et la deuxième composante du signal numérique d'entrée est constituée de vecteurs de mouvements relatifs à la compensation des mouvements entre les images.

7. Une méthode telle que revendiquée à la revendication 6, dans le cadre de laquelle le signal numérique d'entrée intègre des images à codage intra (I), des images à prédiction anticipée (P), des images bidirectionnelles (B) et un paramètre de quantification transmis, ladite méthode regroupant les étapes de quantification inverse des images I, P et B, la requantification des images I et P avec le paramètre de quantification transmis et la requantification des images B avec un paramètre de quantification différent.

8. Une méthode telle que revendiquée à la revendication 6, dans le cadre de laquelle le signal numérique d'entrée comporte des images à codage intra (I), des images à prédiction anticipée (P), des images bidirectionnelles (B) et un paramètre de quantification transmis, ladite méthode regroupant les étapes de quantification inverse des images I, P et B, la requantification des images I, P et B avec un paramètre de quantification différent du paramètre de quantification transmis.

9. Un équipement permettant de modifier le débit binaire d'un signal vidéo numérique d'entrée comprimé à deux composantes, la première composante comprenant des informations d'images quantifiées et la deuxième composante comprenant des décisions de mode et des vecteurs de mouvements relatifs à la compensation des mouvements entre les images, ledit équipement comportant : un décodeur pour soumettre le signal vidéo d'entrée à au moins un processus de décodage partiel mettant en jeu l'isolation de la composante comprenant les vecteurs de mouvements ; un moyen permettant de modifier la compression de la première composante en changeant la quantification d'au moins une partie des informations d'images quantifiées; un assembleur permettant de rassembler les informations d'images ainsi modifiées avec les vecteurs de mouvements, ceci afin de produire un signal vidéo de sortie incluant les informations modifiées d'images et une boucle de codage prédictif intégrant un quantificateur inverse, un bloc compensation de mouvements effectuant une compensation des mouvements au moyen des vecteurs de mouvements du décodeur et un bloc mode gérant le mode d'encodage, la boucle de codage suivant les décisions de mode et les vecteurs de mouvements dictés par le signal vidéo d'entrée.

10. Un équipement tel que revendiqué à la revendication 9 comportant un moyen pour enregistrer le signal numérique de sortie.

11. Un équipement tel que revendiqué à la revendication 10, comportant en outre un moyen pour reproduire le signal numérique de sortie enregistré avec des versions décalées dans le temps de lui-même et un multiplexeur pour multiplexer les versions décalées dans le temps du signal numérique de sortie.

12. Un équipement tel que revendiqué à la revendication 11 comportant les moyens de calculer le débit binaire combiné des versions multiplexées du signal numérique de sortie et d'indiquer quand ledit débit binaire dépasse une limite prédéterminée.

13. Un équipement tel que revendiqué à la revendication 12 dans le cadre duquel le moyen de modifier la compression de ladite première composante du signal numérique d'entrée peut être, exploité pour limiter ledit débit binaire à ladite limite prédéterminée.

14. Un équipement tel qu'éventuellement revendiqué aux revendications 9 à 13, adapté pour changer le débit binaire d'un signal numérique d'entrée comprimé à deux composantes, la première composante du signal numérique d'entrée étant constituée d'une série continue d'images codées et la deuxième composante du signal numérique d'entrée étant constituée de vecteurs de mouvements relatifs à la compensation des mouvements entre les images.

15. Un équipement tel que revendiqué à la revendication 14, adapté pour changer le débit binaire d'un signal numérique d'entrée comprimé incluant des images à codage intra (I), des images à prédiction anticipée (P), des images bidirectionnelles (B) et un paramètre de quantification transmis, ledit appareil contenant un moyen d'inverser les images I, P et B, afin de requantifier les images I et P avec le paramètre de quantification transmis et de requantifier les images B avec un paramètre de quantification différent.

16. Un équipement tel que revendiqué à la revendication 14, adapté pour modifier le débit binaire d'un signal numérique d'entrée comprimé incluant des images à codage intra (I), des images à prédiction anticipée (P), des images bidirectionnelles (B) et un paramètre de quantification transmis, ledit appareil contenant un moyen d'inverser la quantification des images I, P et B, afin de requantifier les images I, P et B avec un paramètre de quantification différent du paramètre de quantification transmis.
